# EUROPEAN PATENT SPECIFICATION

(11) **EP 3 773 968 B1**
(45) Date of publication and mention of the grant of the patent: **26.02.2025**
(21) Application number: 19724232.4
(22) Date of filing: 28.03.2019
(51) Int. Cl.: B01D 15/18, G01N 30/02

(54) **AUTOMATED TWO-COLUMN RECYCLING CHROMATOGRAPHY METHOD FOR UNLOCKING CHALLENGING SEPARATION PROBLEMS**
AUTOMATISIERTES ZWEI-SÄULEN-RECYCLING-CHROMATOGRAFIEVERFAHREN ZUM LÖSEN HERAUSFORDERNDER TRENNPROBLEME
PROCÉDÉ DE CHROMATOGRAPHIE DE RECYCLAGE À DEUX COLONNES AUTOMATISÉ POUR LA RÉSOLUTION DE PROBLÈMES DE SÉPARATION DIFFICILES

(30) Priority: 29.03.2018 US 201862649803 P
(43) Date of publication of application: 17.02.2021
(73) Proprietor: Waters Technologies Corporation, Milford, MA 01757 (US)
(72) Inventor: GRITTI, Fabrice, Franklin, Massachusetts 02038 (US); MCDONALD, Thomas S., Littleton, Massachusetts 01460 (US); LEAL, Mike, Somerset, Massachusetts 02726 (US)
(74) Representative: Forresters IP LLP
(86) International application number: PCT/IB2019/052566
(87) International publication number: WO 2019/186469

(56) References cited:
- WO-A1-2010/072546
- US-A- 4 274 967
- US-A- 4 724 081
- FABRICE GRITTI ET AL: "Ideal versus real automated twin column recycling chromatography process", JOURNAL OF CHROMATOGRAPHY A, vol. 1508, 1 July 2017 (2017-07-01), AMSTERDAM, NL, pages 81 - 94, XP055599390, ISSN: 0021-9673, DOI: 10.1016/j.chroma.2017.06.009

## Description

### Field of the Technology

The present disclosure relates to an automated two-column recycling chromatography method and system for unlocking challenging separation problems. In particular, the present disclosure relates to a detection cell that can measure resolution and width of the chromatographic peaks and automatically switch a valve from a first position to a second position when the measured resolution is less than a desired resolution, the measured combined peak width is less than a maximum combined peak width, and a switch count is less than a predetermined maximum number of switches.

### Background

The full baseline separation of compounds with selectivity factors smaller than 1.05 is extremely challenging or even impossible when using standard high performance liquid chromatography (HPLC) columns that are packed with standard sized particles (e.g., about 3.5 µm) and operated at standard pressure drops (e.g., smaller than about 400 bar). The highest achievable efficiency is that of an infinitely long column run at an infinitely small flow rate. This efficiency limit is fixed by the maximum allowable system pressure, the column permeability, the viscosity of the eluent, and the intensity of the longitudinal diffusivity of the compounds along the column. This limit can only be observed under non-practical experimental conditions for infinitely long columns and elution times.

Alternatively, a two-column recycling separation process (TCRSP) can alleviate this resolution limit by transferring the separation zone from one to another identical column until the spatial width of the zone reaches one column length. Calculations predict that the TCRSP can overcome the classical speed-resolution barrier of a conventional one-column batch process. The performance of TCRSP can be negatively or positively affected by the dependence of the retention factor of the analyte on the local pressure along the column.

One problem with the two-column recycling separation process is that a user has to manually control the switching of a valve that transfers the separation zone from a first column to a second column. This requires constant user involvement in the two-column recycling separation process making the process labor intensive. In addition, the time at which the two columns need to be switched is sensitive to unexpected changes in operating conditions, such as temperature, flow rate, retentivity, and column efficiency. Moreover, each of these variables can change over time, resulting in a loss in efficiency and or resolution with manual valve switching.

Prior art arrangements are known from: US 4724081, which discloses a process which comprises sending a mixture sample in a large amount together with a liquid mobile phase to at least one column, into which a packing having a large particle size has been charged, to preliminarily fractionate the components of the mixture, taking out fractions containing objective components from the eluate from the first column, and recycling said fractions within a loop provided with at least one second column, into which a packing having a large particle size has been charged, to separate precisely the objective components for separation by liquid chromatography; US 4274967, which discloses an apparatus and method for increasing the throughput of a chromatographic system by passing several samples in seriatim through tandemly connected first and second chromatographic columns; WO 2010/072546, which discloses a chromatographic separation device that enables the automatic change of the number of segments involved in a coupled chromatographic column system, without the need to physically detach and attach the individual segments; and Fabrice Gritti ET AL: "Ideal versus real automated twin column recycling chromatography process", Journal of Chromatography A, vol. 1508, 1 July 2017, pages 81-94.

### Summary

The present invention is defined by the claims.

The present technology solves the problems of the prior art by providing an automated two-column recycling chromatography method for unlocking challenging separation problems. **In** particular, the present disclosure relates to a detection cell that measures resolution and width of the chromatographic peaks and automatically switch a valve from a first position to a second position when the measured resolution is less than a desired resolution, the measured combined peak width is less than a maximum combined peak width, and a switch count is less than a predetermined maximum number of switches. This can be done through a feedback loop that is incorporated into the detection cell. The feedback loop can be positioned between the detector and valve. The detection cell can include the detector and feedback loop.

The technology provides a method and device that automatically controls the switching of the valve that transfers the separation zone from a first column to a second column based on measured peak data (e.g., peak resolution and width) instead of based on theory and calculations of when the valve should be switched. The technology can accurately take into account how the peak resolution and width is changing over time due to unexpected changes in operating conditions (e.g., temperature, flow rate, retentivity, and column efficiency) that cannot be taken into consideration effectively using prior art methods and devices.

According to a first aspect, there is provided a recycling chromatography method as recited by Claim 1.

The method can include one or more of the embodiments described herein. The computer can be configured to calculate a switch time and cause the controller to automatically switch the valve from the first position to the second position at the calculated switch time. In some embodiments, the computer continues to monitor the chromatographic peaks of the sample and causes the controller to switch the valve from the first position to the second position or the second position to the first position until a) the measured resolution is greater than the desired resolution; b) the measured combined peak width is greater than or equal to the maximum combined peak width; or c) the switch count is greater than or equal to the predetermined maximum number of switches.

The method can also include detecting the combined flow stream. In some embodiments, the method includes calculating an elution time for each peak.

The detection cell can be a low dispersion detection cell.

In some embodiments, the two chromatographic columns are identical.

The valve is a six-port or an eight-port valve. In some embodiments, the valve is a ten-port valve. The valve can be a low-dispersion valve, which can provide a two-fold gain in final peak resolution for the recycling chromatography method relative to a standard commercial valve.

According to a further aspect, there is provided a chromatography system as recited by Claim 9.

The system can include one or more of the embodiments described herein. The computer can be further configured to calculate a switch time and cause the controller to automatically switch the valve from the first position to the second position at the calculated switch time. In some embodiments, the detection cell is a low dispersion detection cell.

The two chromatographic columns can be identical. The two chromatography columns can be liquid chromatographic columns.

In some embodiments, the valve is a six-port valve. The valve can be an eight-port valve for a ten-port valve.

The embodiments of the present disclosure provide advantages over the prior art by automatically controlling the switching of the valve that transfers the separation zone from a first column to a second column based on measured peak data instead of relying on predetermined switching times that were based on calculated peak resolutions and widths. The pre-calculated switching times cannot take into account changes in operating conditions. The present technology can accurately take into account any fluctuations in operating conditions in real-time based on measured, real-time peak data instead of pre-determined switching times based on theory and calculation.

The technology enables users to solve exceptionally hard separation problems under isocratic conditions (selectivity factor α < 1.05) with standard HPLC columns, which cannot alone achieve full separation. Chiral compounds, impurities from API, isomers, isotopes, and monoclonal antibodies and their aggregates can be separated and are direct applications of this technology. A benefit of the technology is that a user does not have to control manually the switching valve timing, which is sensitive to unexpected changes in operating conditions such as temperature, flow rate, retentivity, and column efficiency that can change in real-time.

### Brief Description of the Drawings

The technology will be more fully understood from the following detailed description taken in conjunction with the accompanying drawings, in which:
**FIG. 1A** is a schematic representation of a two-column recycling chromatography system using an external ten-port valve in Position A, according to an illustrative embodiment of the technology.
**FIG. 1B** is a schematic representation of a two-column recycling chromatography system using an external ten-port valve in Position B, according to an illustrative embodiment of the technology.
**FIG. 2** is a flow chart of the logic used by the feedback loop incorporated into the detection cell, according to an illustrative embodiment of the technology.

### Detailed Description

The technology is based on the design of a new instrumentation and method to be used in chromatography systems, for example, liquid chromatography or gas chromatography. The system includes an injector, two identical or nearly identical chromatographic columns, a valve having 6, 8, or 10 ports, and a detector, for example, a low dispersion detector. The compounds are separated through a virtual semi-infinitely long column by transferring at the time the valve switches the sample zone from one column to a second column (and vice versa) until the width of the separation zone becomes equal to one column length.

The two-column recycling system and process includes a valve switch that allows for the automatic switching of the valve and automatic termination of the process. This is controlled by a feedback answer provided by a detection cell, for example, a low dispersion detection cell, placed in series between the two chromatographic columns. The technology allows exceptionally hard separation problems under isocratic conditions (selectivity factor α < 1.05) with standard HPLC columns to be solved. Chiral compounds, impurities from active pharmaceutical ingredients (API), isomers, isotopes, and monoclonal antibodies and their aggregates can be separated and are direct applications of this technology. A benefit of the technology is that a user does not have to control manually the switching valve timing, which is sensitive to unexpected changes in operating conditions such as temperature, flow rate, retentivity, and column efficiency that can change in real-time. In addition, the technology can provide a lower limit of detection than can be provided at the column outlet.

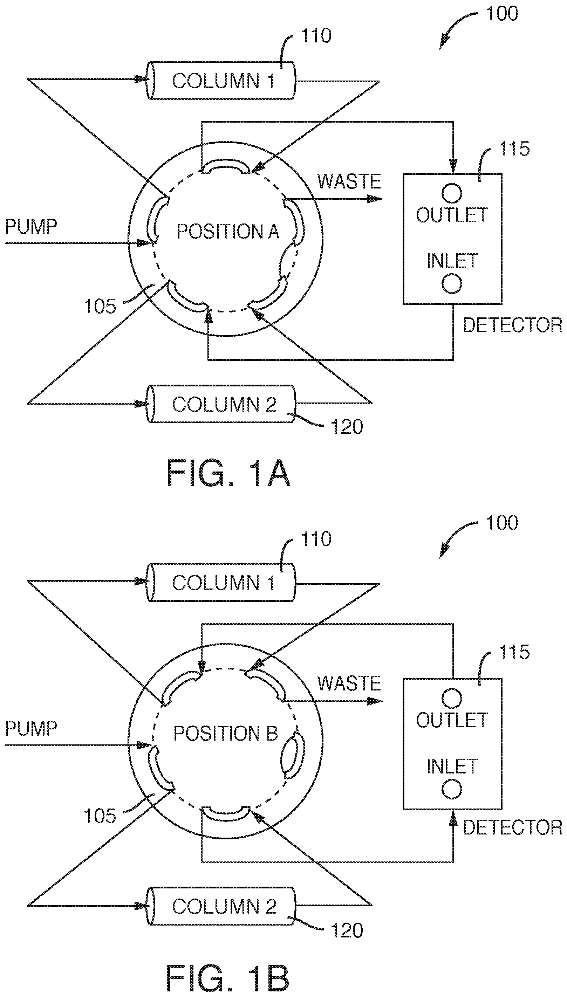

**FIG. 1A** is a schematic representation of a two-column recycling chromatography system **100** using an external ten-port valve in Position A and **FIG. 1B** is a schematic representation of a two-column recycling chromatography system **100** using an external ten-port valve in Position B. The system includes an injector (not shown) that injects a sample into a mobile phase flow stream creating a combined flow stream. The system also includes a valve **105.** The valve **105** can have 6 ports, 8 ports, or 10 ports.

The system includes two chromatographic columns, first column **110** and second column **120.** The first column **110** and the second column **120** can be identical. In some embodiments, the first column **110** and the second column **120** are nearly identical. The two chromatography columns **110, 120** are positioned in series. The first column **110** and the second column **120** can be liquid chromatography columns or gas chromatography columns. The two columns **110, 120** can be high performance chromatography columns. The two columns **110, 120** can be stainless steel. In some embodiments, more than two columns are used, for example, three or four columns. The column length, internal diameter, packing material, and flow rate can be chosen based on the specific sample and separation being performed. Similarly, the column efficiency, retention factor, and selectivity factor can be based on the specific sample and separation being performed. One of ordinary skill in the art understands how to choose these column parameters based on the sample to be separated.

The sample dispersion, or band spreading, can be kept to a minimum by minimizing the distance between the components (e.g., columns, valves, detector, tubing). For example, the distance between the components can be between about 10 cm to about 20 cm. In some embodiments, the distance between the components can be about 15 cm. In some embodiments, the distance between the valve and the columns inlets is about 14 cm, 13 cm, 12 cm, 11 cm, or 10 cm. As an example, the distance between the valve and the column inlets and outlets can be about 15 cm. This allows the use of a low-dispersion face seal 75 µm x 25 cm long connecting tubes with minimum sample dispersion less than about 0.1 µL². ZenFit^{®} connection technology commercially available from Waters Corporation, Milford, MA can be use as the connecting tubes. By keeping the distance between each component minimal, band spreading that occurs outside of the columns can also be minimized.

A detector/detection cell **115** is positioned between the first column **110** and the second column **120.** The detection cell **115** can be a low dispersion detection cell to keep the any extra-column band broadening attributable to the detection cell small. The detection cell can be, for example, a UV detection cell or a fluorescence detector.

Referring to **FIG. 1A****,** a sample and mobile phase combined flow stream are flowed through a valve **105** in Position A and into a first column **110** where at least a portion of the sample is separated. The mobile phase composition is chosen based on the specific separation to be achieved, the specific sample that is being separated, and/or whether the chromatography columns are liquid chromatography columns or gas chromatography columns.

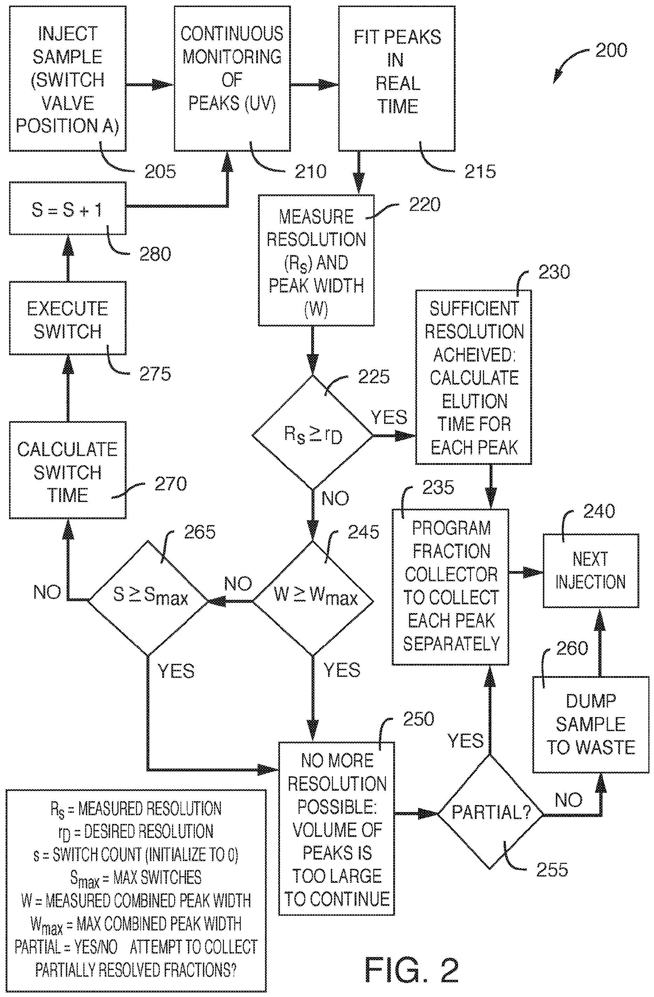

The partially separated combined flow stream then flows out of the first column **110** and through valve **105** to a detector **115.** The detector **115** is coupled to a computer that automatically determines, based on a detected/measured peak resolution and width, and switches the valve **105** from Position A to Position B when the measured resolution is less than a desired resolution, the measured combined peak width is less than a maximum combined peak width, and a switch count is less than a predetermined maximum number of switches. The method uses a feedback loop, shown in **FIG.** 2.

Still referring to **FIG. 1A****,** the partially separated combined flow stream exits the detector **115,** flows through valve **105** and into a second column **120** where the sample is further separated. The further separated combined flow stream exits the second column **120** and flows through valve **105.** If the detector **115** has determined (i.e., through the feedback loop) that the measured resolution was greater than a desired resolution, a measured combined peak width was greater than or equal to a maximum combined peak width or that a switch count was greater than or equal to a predetermined maximum number of switches based on the separation that occurred in the first column **110,** then the valve **105** remains in Position A and the combined flow stream flows out of the valve **105** to waste. In some embodiments, the combined flow stream does not go to waste but instead flows to a further detector (not shown) that is downstream of the at least two chromatographic column. Further detection and analysis can be performed on the separated sample by the additional detector. The detector can be, for example, a UV detection cell or a fluorescence detector.

However, if the feedback loop has determined that based on a detected/measured peak resolution and width that the measured resolution is less than a desired resolution, the measured combined peak width is less than a maximum combined peak width, and a switch count is less than a predetermined maximum number of switches, then the detector through the self-controlled feed-back loop, will automatically switch the valve **105** from Position A in **FIG. 1A** to Position B in **FIG. 1B****.** The valve **105** is switched prior to the combined flow stream entering the valve **105** after exiting the second column **120.**

When the valve is switched to Position B in **FIG. 1B****,** the sample and mobile phase exit the second column **120,** enter the valve **105** and flow to the detector **115.** The flow exits the detector **115,** flows into the valve **105** and then into the first column **110.** If the feedback loop determines that the measured resolution is greater than a desired resolution, a measured combined peak width is greater than or equal to a maximum combined peak width or that a switch count is greater than a predetermined maximum number of switches based on the separation that occurred in the second column **120,** then the valve **105** remains in Position B and the combined flow stream flows out of the valve 105 to waste. As described above, in some embodiments, the combined flow stream does not flow to waste and instead flows to a detector for further analysis of the sample.

However, if the feedback loop determines that based on a detected/measured peak resolution and width that the measured resolution is less than a desired resolution, the measured combined peak width is less than a maximum combined peak width, and a switch count is less than a predetermined maximum number of switches, then the detector, through the feedback loop, will automatically switch the valve **105** from Position B in **FIG. 1B** to Position A in **FIG. 1A****.** The valve is switched prior to the sample and mobile phase entering the valve **105** after exiting the first column **110.**

When the valve is switched from Position B in **FIG. 1B** to Position A in **FIG. 1A****,** the sample and mobile phase flow out of the first column **110** into the valve **105** and to the detector **115.** The flow continues as was previously described for flow of the sample and mobile phase with the valve **105** in Position A. The flow of the combined flow stream continues in this manner until the detector **115** determines that the measured resolution is greater than a desired resolution, a measured combined peak width is greater than or equal to a maximum combined peak width or that a switch count is greater than a predetermined maximum number of switches at which point the detector automatically stops switching valve **115** and the sample and mobile phase flow to waste.

Each time the sample and mobile phase flow through the first column **110** and the second column **120,** the sample is further separated. In this way, the continuous separation of the sample through the two columns mimics an infinitely long column.

**FIG. 2** shows a flow chart **200** of the logic used by the feedback loop to determine whether the detection cell should automatically switch the position of a valve, e.g., valve **115** of **FIGS. 1A-B**. The process begins by injecting a sample (step **205)** into a mobile phase flow stream of a chromatography system, for example, a liquid chromatography or gas chromatography system, creating a combined flow stream. If the valve (as described in **FIGs. 1A** and **1B**) is not already in Position A, then the valve is switched to Position A. As the combined flow stream flows through the chromatography columns and detection cell, the detection cell continuously monitors the peaks, for example, by UV detection (step **210**). The detection cell fits the peaks in real time (step **215**) and measures the resolution (Rₛ) and the peak width (w) (step **220**) of the separated sample.

The feedback loop then makes a first determination based on the measurements and calculations of the detector. The first determination is whether the measured resolution (Rₛ) is greater than a desired resolution (r_{D}) (step **225**). The desired resolution (r_{D}) is a resolution value that has been pre-determined by the user as being a sufficient resolution for the separation of the sample. If it is determined that the measured resolution (Rₛ) is greater than a desired resolution (r_{D}) (step **225**), then sufficient resolution has been achieved and the detection cell can calculate the elution time for each peak that has been separated from the sample (step **230**)**.** A program fraction collector can collect each peak separately (step **235**) and the method has been completed. A new sample can then be injected (step **240**) and the process can start again. In some embodiments, the method includes detecting the combined flow stream by a detector that is located downstream of the at least two chromatographic columns. The detector can be, for example, a UV detection cell or a fluorescence detector.

If, the measured resolution (Rₛ) is less than a desired resolution (r_{D}) (step **225**), the feedback loop determines whether the measured combined peak width (w) is greater than or equal to a maximum combined peak width (wₘₐₓ) (step **245**). The maximum combined peak width is a predetermined maximum based on the specific sample that is being separated. In other words, the detector records the time at which the separation zone is fully eluted from the first column and sends a command to the valve to actuate at that moment in time. The same feedback control is repeated and ends when the front part of the sample zone is leaving one column which the rear part of the sample zone is still eluting from another column.

If the measured combined peak width (w) is greater than or equal to a maximum combined peak width (wₘₐₓ) (step **245**), then no more resolution of the peaks in possible and the volume of peaks is too large to continue (step **250**). A data processor in a feedback loop that can be incorporated into the detector determines whether a partial separation of the peaks can be collected (step **255**). If a partial separation of the peaks can be collected (step **255**), then the program fraction collection can collect each partially separated peak (step **235**), a new sample can be injected (step **240**) and the process can start again. If a partial separation of the peaks cannot be collected (step **255**), the sample is dumped to waste (step **260**), a new sample can be injected (step **240**) and the process can start again.

If, the measured resolution (Rₛ) is less than a desired resolution (r_{D}) (step **225**) and the measured combined peak width (w) is less than a maximum combined peak width (wₘₐₓ) (step **245**), then the feedback loop incorporated into the detection cell (for example, detection cell **115** of **FIGs. 1A** and **1B****)** determines whether the switch count (s) is greater than or equal to a predetermined maximum number of switches (sₘₐₓ) (step **265**). The predetermined maximum number of switches is determined based on the specific sample to be separated. If the switch count (s) is greater than or equal to a predetermined maximum number of switches (sₘₐₓ) (step **265**), then no more resolution of the peaks in possible and the volume of peaks is too large to continue (step **250**). A data processor in a feedback loop determines whether a partial separation of the peaks can be collected (step **255**). If a partial separation of the peaks can be collected (step **255**), then the program fraction collection can collect each partially separated peak (step **235**), a new sample can be injected (step **240**) and the process can start again. If a partial separation of the peaks cannot be collected (step **255**), the sample is dumped to waste (step **260**), a new sample can be injected (step **240**) and the process can start again.

If the feedback loop determines that (1) the measured resolution (Rₛ) is less than a desired resolution (r_{D}) (step **225**); (2) the measured combined peak width (w) is less than a maximum combined peak width (wₘₐₓ) (step **245**); and (3) the switch count (s) is less than a predetermined maximum number of switches (sₘₐₓ) (step **265**), then the switch time is calculated (step **270**). The switch time is the time at which the detection cell will switch the valve from Position A to Position B or vice versa (see, e.g., **FIGs. 1A** and **1B**)**.** The detection cell will then execute the switch (step 275) at the calculated time by switching the valve from Position A to Position B or from Position B to Position A. The switch count (s), which was initialized at zero, is then increased by one (s = s + 1) (step **280**). The process then repeats with the continuation monitoring of the peaks (step **210**), fitting the peaks in real time (step **215**), and measuring the resolution and peak width (step **220**) to determine whether the results of the separation are sufficient (step **230**), no more resolution is possible (step **250**) or whether the process needs to repeat again (steps **270, 275, 280**).

It should be noted that the particular numbering of the steps of the process **200** is not intended to imply that the process occurs serially or in any particular order. For example, the feedback loop can determine whether (1) the measured resolution (Rₛ) is less than a desired resolution (r_{D}) (step **225**); (2) the measured combined peak width (w) is less than a maximum combined peak width (wₘₐₓ) (step **245**); and (3) the switch count (s) is less than a predetermined maximum number of switches (sₘₐₓ) (step **265**), simultaneously. In some embodiments, two steps can be performed simultaneously and then the third step can be performed. Additionally, the steps can be performed in any order, for example step **245** can be performed first, then step **225,** then step **265.** Alternatively, step **265** can be performed first, then step **245,** then step **225.** In some embodiments, the algorithm only includes two out of the three steps, for example, the algorithm can include steps **225** and **245,** or steps **245** and **265,** or steps **225** and **265.**

The feedback loop is in communication with a controller that controls the position of the valve. The controller can be located in the detection cell or the controller can be located with the circuitry (e.g., a microprocessor) of the feedback loop that is housed in a separate component from the detector cell (e.g., in a component located between the detector cell and the valve). The controller is in communication with the feedback loop, the valve, and the detection cell.

A computer is coupled to the output of the detection cell. The computer has code executing thereof, which, when executed, causes the computer perform the recycling chromatography method described herein, i.e., monitoring chromatographic peaks of the sample as output by the detection cell, measuring resolution and width of the chromatographic peaks, and causing the controller to automatically switch the valve from a first position to a second position when the measured resolution is less than a desired resolution, the measured combined peak width is less than a maximum combined peak width, and a switch count is less than a predetermined maximum number of switches. In some embodiments, the computer can store the data in memory.

In some embodiments, a non-transitory computer readable medium can include code stored thereof for executing the recycling chromatography method described herein.

## Claims

1. A recycling chromatography method comprising the steps of:
injecting a sample into a mobile phase flow stream of a liquid chromatography system (100) to create a combined flow stream; the liquid chromatography system comprising:
a first chromatographic column (110) and a second chromatographic column (120) positioned in series;
a valve (105) in fluid communication with the first chromatographic column and the second chromatographic column, the valve having a first operating position and a second operating position;
a detection cell (115) in fluid communication with and positioned between the first chromatographic column and the second chromatographic column; and
a controller that controls the position of the valve;
wherein when the valve is in the first position, the output of the first chromatographic column passes through the valve into the detection cell and the output of the detection cell passes through the valve and into the second chromatographic column; and
when the valve is in the second position, the output of the second chromatographic column passes through the valve into the detection cell and the output of the detection cell passes through the valve and into the first chromatographic column,
flowing the combined flow stream through the first and second chromatographic columns; and
monitoring chromatographic peaks of the sample with a computer coupled to the detection cell, wherein the computer measures resolution and width of the chromatographic peaks and causes the controller to automatically switch the valve from the first position to the second position when the measured resolution is less than a desired resolution, the measured combined peak width is less than a maximum combined peak width, and a switch count is less than a predetermined maximum number of switches.

2. The recycling chromatography method of claim 1, wherein the computer is configured to calculate a switch time and cause the controller to automatically switch the valve from the first position to the second position at the calculated switch time.

3. The recycling chromatography method of claim 1, wherein the computer continues to monitor the chromatographic peaks of the sample and cause the controller to switch the valve from the first position to the second position or the second position to the first position until
a) the measured resolution is greater than the desired resolution;
b) the measured combined peak width is greater than or equal to the maximum combined peak width; or
c) the switch count is greater than or equal to the predetermined maximum number of switches.

4. The recycling chromatography method of claim 3, further comprising detecting the combined flow stream.

5. The recycling chromatography method of claim 3, further comprising calculating an elution time for each peak.

6. The recycling chromatography method of claim 1, wherein the detection cell is a low dispersion detection cell.

7. The recycling chromatography method of claim 1, wherein the first chromatographic column and the second chromatographic column are identical.

8. The recycling chromatography method of claim 1, wherein the valve is a six-port or an eight-port valve.

9. A chromatography system (100) comprising:
an injector for injecting a sample into a mobile phase flow stream creating a combined flow stream;
a first chromatographic column (110) and a second chromatographic column (120) positioned in series and downstream of the injector;
a valve (105) in fluid communication with the first chromatographic column and the second chromatographic column, the valve having a first operating position and a second operating position;
a detection cell (115) in fluid communication with and positioned between the first chromatographic column and the second chromatographic column,
a controller configured to control the position of the valve between the first operating position and the second operating position;
**characterized by** a computer in communication with the detection cell and the controller, wherein the computer is configured to:
monitor chromatographic peaks of the sample;
measure resolution and width of the chromatographic peaks; and
cause the controller to automatically switch the valve from the first position to the second position when the measured resolution is less than a desired resolution, the measured combined peak width is less than a maximum combined peak width, and a switch count is less than a predetermined maximum number of switches;
wherein when the valve is in the first position, the output of the first chromatographic column passes through the valve into the detection cell and the output of the detection cell passes through the valve and into the second chromatographic column; and
when the valve is in the second position, the output of the second chromatographic column passes through the valve into the detection cell and the output of the detection cell passes through the valve and into the first chromatographic column.

10. The chromatography system of claim 9, wherein the computer is further configured to calculate a switch time and cause the controller to automatically switch the valve from the first position to the second position at the calculated switch time.

11. The chromatography system of claim 9, wherein the detection cell is a low dispersion detection cell.

12. The chromatography system of claim 9, wherein the first chromatographic column and the second chromatographic column are identical.

13. The chromatography system of claim 9, wherein the valve is a six-port or an eight-port valve.

14. The chromatography system of claim 9, wherein the first chromatographic column and the second chromatographic column are liquid chromatographic columns.

## Patentansprüche

1. Recycling-Chromatografieverfahren, umfassend die Schritte:
Injizieren einer Probe in einen mobilen Phasendurchflussstrom eines Flüssigchromatografiesystems (100), um einen kombinierten Durchflussstrom zu erzeugen; wobei das Flüssigchromatografiesystem umfasst:
eine erste chromatografische Säule (110) und eine zweite chromatografische Säule (120), die in Reihe angeordnet sind;
ein Ventil (105) in Fluidverbindung mit der ersten chromatografischen Säule und der zweiten chromatografischen Säule, wobei das Ventil eine erste Betriebsposition und eine zweite Betriebsposition aufweist;
eine Detektionszelle (115), die in Fluidverbindung mit der ersten chromatografischen Säule und der zweiten chromatografischen Säule steht und zwischen diesen angeordnet ist; und
eine Steuerung, welche die Stellung des Ventils steuert;
wobei, wenn sich das Ventil in der ersten Position befindet, der Ausgang der ersten chromatografischen Säule durch das Ventil in die Detektionszelle gelangt und der Ausgang der Detektionszelle durch das Ventil in die zweite chromatografische Säule gelangt; und
wenn sich das Ventil in der zweiten Position befindet, der Ausgang der zweiten chromatografischen Säule durch das Ventil in die Detektionszelle gelangt und der Ausgang der Detektionszelle durch das Ventil in die erste chromatografische Säule gelangt,
Leiten des kombinierten Durchflussstroms durch die erste und die zweite chromatografische Säule; und
Überwachen chromatografischer Peaks der Probe mit einem Computer, der an die Detektionszelle gekoppelt ist, wobei der Computer die Auflösung und Breite der chromatografischen Peaks misst und die Steuerung dazu veranlasst, das Ventil automatisch von der ersten Position in die zweite Position umzuschalten, wenn die gemessene Auflösung geringer als eine gewünschte Auflösung ist, die gemessene kombinierte Peak-Breite geringer als eine maximale kombinierte Peak-Breite ist und eine Umschaltzahl geringer als eine vorgegebene maximale Anzahl von Umschaltvorgängen ist.

2. Recycling-Chromatografieverfahren nach Anspruch 1, wobei der Computer konfiguriert ist, um eine Umschaltzeit zu berechnen und die Steuerung dazu zu veranlassen, das Ventil zur berechneten Umschaltzeit automatisch von der ersten Position in die zweite Position umzuschalten.

3. Recycling-Chromatografieverfahren nach Anspruch 1, wobei der Computer weiterhin die chromatografischen Peaks der Probe überwacht und die Steuerung dazu veranlasst, das Ventil von der ersten Position in die zweite Position oder von der zweiten Position in die erste Position umzuschalten, bis
a) die gemessene Auflösung größer als die gewünschte Auflösung ist;
b) die gemessene kombinierte Peak-Breite größer oder gleich der maximalen kombinierten Peak-Breite ist; oder
c) die Umschaltzahl größer oder gleich der vorgegebenen maximalen Umschaltzahl ist.

4. Recycling-Chromatografieverfahren nach Anspruch 3, ferner umfassend das Erfassen des kombinierten Durchflussstroms.

5. Recycling-Chromatografieverfahren nach Anspruch 3, ferner umfassend das Berechnen einer Elutionszeit für jeden Peak.

6. Recycling-Chromatografieverfahren nach Anspruch 1, wobei die Detektionszelle eine Detektionszelle mit geringer Dispersion ist.

7. Recycling-Chromatografieverfahren nach Anspruch 1, wobei die erste chromatografische Säule und die zweite chromatografische Säule identisch sind.

8. Recycling-Chromatografieverfahren nach Anspruch 1, wobei das Ventil ein Sechs-Wege- oder ein Acht-Wege-Ventil ist.

9. Flüssigchromatografiesystem (100), umfassend:
einen Injektor zum Injizieren einer Probe in einen mobilen Phasendurchflussstrom, wodurch ein kombinierter Durchflussstrom erzeugt wird;
eine erste chromatografische Säule (110) und eine zweite chromatografische Säule (120), die in Reihe und stromabwärts des Injektors angeordnet sind;
ein Ventil (105) in Fluidverbindung mit der ersten chromatografischen Säule und der zweiten chromatografischen Säule, wobei das Ventil eine erste Betriebsposition und eine zweite Betriebsposition aufweist;
eine Detektionszelle (115), die in Fluidverbindung mit der ersten chromatografischen Säule und der zweiten chromatografischen Säule steht und zwischen diesen angeordnet ist,
eine Steuerung, die konfiguriert ist, um die Position des Ventils zwischen der ersten Betriebsposition und der zweiten Betriebsposition zu steuern;
**gekennzeichnet durch** einen Computer in Kommunikation mit der Detektionszelle und der Steuerung, wobei der Computer konfiguriert ist, um:
die chromatografischen Peaks der Probe zu überwachen;
die Auflösung und Breite der chromatografischen Peaks zu messen; und
die Steuerung dazu zu veranlassen, das Ventil automatisch von der ersten Position in die zweite Position umzuschalten, wenn die gemessene Auflösung geringer als eine gewünschte Auflösung ist, die gemessene kombinierte Peak-Breite geringer als eine maximale kombinierte Peak-Breite ist und eine Umschaltzahl geringer als eine vorgegebene maximale Anzahl von Schaltvorgängen ist;
wobei, wenn sich das Ventil in der ersten Position befindet, der Ausgang der ersten chromatografischen Säule durch das Ventil in die Detektionszelle gelangt und der Ausgang der Detektionszelle durch das Ventil in die zweite chromatografische Säule gelangt; und
wenn sich das Ventil in der zweiten Position befindet, der Ausgang der zweiten chromatografischen Säule durch das Ventil in die Detektionszelle gelangt und der Ausgang der Detektionszelle durch das Ventil in die erste chromatografische Säule gelangt.

10. Chromatografiesystem nach Anspruch 9, wobei der Computer ferner konfiguriert ist, um eine Umschaltzeit zu berechnen und die Steuerung dazu zu veranlassen, das Ventil zur berechneten Umschaltzeit automatisch von der ersten Position in die zweite Position umzuschalten.

11. Chromatografiesystem nach Anspruch 9, wobei die Detektionszelle eine Detektionszelle mit geringer Dispersion ist.

12. Chromatografiesystem nach Anspruch 9, wobei die erste chromatografische Säule und die zweite chromatografische Säule identisch sind.

13. Chromatografiesystem nach Anspruch 9, wobei das Ventil ein Sechs-Wege- oder ein Acht-Wege-Ventil ist.

14. Chromatografiesystem nach Anspruch 9, wobei die erste chromatografische Säule und die zweite chromatografische Säule flüssigchromatografische Säulen sind.

## Revendications

1. Procédé de chromatographie de recyclage comprenant les étapes suivantes :
l'injection d'un échantillon dans un flux de phase mobile d'un système de chromatographie liquide (100) pour créer un flux combiné ; le système de chromatographie liquide comprenant :
une première colonne chromatographique (110) et une seconde colonne chromatographique (120) placées en série ;
une vanne (105) en communication fluidique avec la première colonne chromatographique et la seconde colonne chromatographique, la vanne ayant une première position de fonctionnement et une seconde position de fonctionnement ;
une cellule de détection (115) en communication fluidique avec la première colonne chromatographique et la seconde colonne chromatographique et placée entre elles ; et
un dispositif de commande qui commande la position de la vanne ;
dans lequel lorsque la vanne est dans la première position, la production de la première colonne chromatographique passe à travers la vanne dans la cellule de détection et la production de la cellule de détection passe à travers la vanne et dans la seconde colonne chromatographique ; et
lorsque la vanne est dans la seconde position, la production de la seconde colonne chromatographique passe à travers la vanne dans la cellule de détection et la production de la cellule de détection passe à travers la vanne et dans la première colonne chromatographique,
faisant s'écouler le flux combiné à travers la première et la seconde colonne chromatographique ; et
surveillant les pics chromatographiques de l'échantillon avec un ordinateur couplé à la cellule de détection, dans lequel l'ordinateur mesure la résolution et la largeur des pics chromatographiques et amène le dispositif de commande à commuter automatiquement la vanne de la première position à la seconde position lorsque la résolution mesurée est inférieure à une résolution souhaitée, la largeur de pic combinée mesurée est inférieure à une largeur de pic combinée maximale et que le nombre de commutations est inférieur à un nombre maximal de commutations prédéterminé.

2. Procédé de chromatographie de recyclage selon la revendication 1, dans lequel l'ordinateur est configuré pour calculer un temps de commutation et amener le dispositif de commande à commuter automatiquement la vanne de la première position à la seconde position au temps de commutation calculé.

3. Procédé de chromatographie de recyclage selon la revendication 1, dans lequel l'ordinateur continue à surveiller les pics chromatographiques de l'échantillon et à amener le dispositif de commande à commuter la vanne de la première position à la seconde position ou de la seconde position à la première position, jusqu'à ce que
a) la résolution mesurée soit supérieure à la résolution souhaitée ;
b) la largeur de pic combinée mesurée soit supérieure ou égale à la largeur de pic combinée maximale ; ou
c) le nombre de commutations soit supérieur ou égal au nombre maximal de commutations prédéterminé.

4. Procédé de chromatographie de recyclage selon la revendication 3, comprenant en outre la détection du flux combiné.

5. Procédé de chromatographie de recyclage selon la revendication 3, comprenant en outre le calcul d'un temps d'élution pour chaque pic.

6. Procédé de chromatographie de recyclage selon la revendication 1, dans lequel la cellule de détection est une cellule de détection à faible dispersion.

7. Procédé de chromatographie de recyclage selon la revendication 1, dans lequel la première colonne chromatographique et la seconde colonne chromatographique sont identiques.

8. Procédé de chromatographie de recyclage selon la revendication 1, dans lequel la vanne est une vanne à six orifices ou à huit orifices.

9. Système de chromatographie en phase liquide (100) comprenant :
un injecteur pour l'injection d'un échantillon dans un flux de phase mobile créant un flux combiné ;
une première colonne chromatographique (110) et une seconde colonne chromatographique (120) placées en série et en aval de l'injecteur ;
une vanne (105) en communication fluidique avec la première colonne chromatographique et la seconde colonne chromatographique, la vanne ayant une première position de fonctionnement et une seconde position de fonctionnement ;
une cellule de détection (115) en communication fluidique avec la première colonne chromatographique et la seconde colonne chromatographique et placée entre elles,
un dispositif de commande configuré pour commander la position de la vanne entre la première et la seconde position de fonctionnement ;
**caractérisé par** un ordinateur en communication avec la cellule de détection et le dispositif de commande, dans lequel l'ordinateur est configuré pour :
surveiller les pics chromatographiques de l'échantillon ;
mesurer la résolution et la largeur des pics chromatographiques ; et
amener le dispositif de commande à commuter automatiquement la vanne de la première à la seconde position lorsque la résolution mesurée est inférieure à une résolution souhaitée, la largeur de pic combinée mesurée est inférieure à une largeur de pic combinée maximale et le nombre de commutation est inférieur à un nombre maximal de commutations prédéterminé ;
dans lequel lorsque la vanne est dans la première position, la production de la première colonne chromatographique passe à travers la vanne dans la cellule de détection et la production de la cellule de détection passe à travers la vanne et dans la seconde colonne chromatographique ; et
lorsque la vanne est dans la seconde position, la production de la seconde colonne chromatographique passe à travers la vanne dans la cellule de détection et la production de la cellule de détection passe à travers la vanne et dans la première colonne chromatographique.

10. Système de chromatographie selon la revendication 9, dans lequel l'ordinateur est en outre configuré pour calculer un temps de commutation et amener le dispositif de commande à commuter automatiquement la vanne de la première à la seconde position au temps de commutation calculé.

11. Système de chromatographie selon la revendication 9, dans lequel la cellule de détection est une cellule de détection à faible dispersion.

12. Système de chromatographie selon la revendication 9, dans lequel la première colonne chromatographique et la seconde colonne chromatographique sont identiques.

13. Système de chromatographie selon la revendication 9, dans lequel la vanne est une vanne à six orifices ou à huit orifices.

14. Système de chromatographie selon la revendication 9, dans lequel la première colonne chromatographique et la seconde colonne chromatographique sont des colonnes de chromatographie liquide.
